# EUROPÄISCHE PATENTSCHRIFT

(11) **EP 3 230 141 B1**
(45) Veröffentlichungstag und Bekanntmachung des Hinweises auf die Patenterteilung: **03.11.2021**
(21) Anmeldenummer: 15804671.4
(22) Anmeldetag: 18.11.2015
(51) Int. Cl.: B60W 30/182, B60W 50/08, B60W 30/188

(54) **VERFAHREN UND VORRICHTUNG ZUR VERBRAUCHSOPTIMIERTEN STEUERUNG EINES KRAFTFAHRZEUGES**
METHOD AND DEVICE FOR THE CONSUMPTION-OPTIMIZED CONTROL OF A MOTOR VEHICLE
PROCÉDÉ ET DISPOSITIF DE COMMANDE OPTIMISÉE EN TERMES DE CONSOMMATION D'UN VÉHICULE AUTOMOBILE

(30) Priorität: 12.12.2014 EP 14004192; 07.10.2015 WO PCT/EP2015/001968
(43) Veröffentlichungstag der Anmeldung: 18.10.2017
(73) Patentinhaber: Petters, Norbert, 18147 Rostock (DE)
(72) Erfinder: Petters, Norbert, 18147 Rostock (DE)
(86) Internationale Anmeldenummer: PCT/EP2015/002300
(87) Internationale Veröffentlichungsnummer: WO 2016/091352

(56) Entgegenhaltungen:
- EP-A1- 2 151 362
- EP-A1- 2 157 003
- EP-A1- 2 594 443
- EP-A1- 2 620 339
- DE-A1-102007 050 504
- DE-A1-102008 001 669
- DE-A1-102009 002 385
- US-A1- 2011 145 042
- None

## Beschreibung

Die Erfindung betrifft ein Verfahren zur verbrauchsoptimierten Steuerung eines Kraftfahrzeuges. Des Weiteren betrifft die Erfindung eine Vorrichtung zur verbrauchsoptimierten Steuerung eines Kraftfahrzeugs.

Es sind verschiedene Steuersysteme für Kraftfahrzeuge bekannt, welche beispielsweise spezielle Getriebemodi aufweisen, mittels welcher eine Motorleistung optimal eingestellt wird. Solche Steuersysteme sind beispielsweise aus der DE 44 11 940 A1 bekannt.

Aus der EP 2 151 362 A1 ist ein Verfahren zum Betreiben eines Fahrzeugs mit elektrischem Antrieb bekannt. Das Verfahren umfasst die Definition einer ersten Zone und einer zweiten Zone. Die erste Zone hat eine zugeordnete erste Charakteristik und die zweite Zone hat eine zugeordnete zweite Charakteristik, die sich von der ersten Charakteristik unterscheidet. Das Verfahren umfasst ferner das Umschalten eines Betriebsmodus eines Fahrzeugs von einem ersten Betriebsmodus in der ersten Zone auf einen zweiten Betriebsmodus in der zweiten Zone als Reaktion darauf, dass das Fahrzeug von der ersten Zone in die zweite Zone übergeht.

Der Erfindung liegt die Aufgabe zu Grunde, ein verbessertes Verfahren zur verbrauchsoptimierten Steuerung eines Kraftfahrzeugs sowie eine verbesserte Vorrichtung zur verbrauchsoptimierten Steuerung des Kraftfahrzeugs anzugeben. Hinsichtlich der Verfahren wird die Aufgabe erfindungsgemäß durch die im Anspruch 1 angegebenen Merkmale gelöst. Hinsichtlich der Vorrichtung wird die Aufgabe durch die im Anspruch 13 angegebenen Merkmale gelöst.

Vorteilhafte Ausgestaltungen der Erfindung sind Gegenstand der Unteransprüche.

Beim erfindungsgemäßen Verfahren zur Steuerung eines Kraftfahrzeuges, wird geprüft, ob ein vorgegebener optimaler Betriebsmodus zur Steuerung des Kraftfahrzeugs aktiviert ist und ein Grenzwert für eine Gasemission vorgegeben ist, wobei bei aktiviertem optimalen Betriebsmodus und ermitteltem Grenzwert für die Gasemission das Kraftfahrzeug derart gesteuert wird, dass maximal der vorgegebene Grenzwert für die Gasemission emittiert wird, wobei der optimale Betriebsmodus manuell aktiviert wird und der Grenzwert für die Gasemission, insbesondere für einen durchschnittlichen Kohlenstoffdioxid- und/oder Stickstoff-Ausstoß, manuell vorgegeben wird.

Die Vorteile der Erfindung liegen darin, dass durch die Steuerung des Kraftfahrzeugs in Abhängigkeit vom ermittelten Grenzwert für die Gasemission das Kraftfahrzeug mit optimalem, insbesondere reduziertem oder geringstem Schadstoffausstoß und somit besonders wirtschaftlich und Kosten sparend betrieben werden kann. Dabei kann der Fahrer des Kraftfahrzeugs individuell einen, insbesondere minimalen Grenzwert für die Gasemission vorgegeben.

Im Folgenden wird unter einer Gasemission ein Kohlenstoffdioxid-Ausstoß, ein Kohlenstoffmonoxid-Ausstoß, Kohlenwasserstoff-Ausstoß und/oder Stickstoff-Ausstoß (auch kurz CO-, CO₂-, CH-, NOₓ-Ausstoß genannt) verstanden. Kohlenstoffdioxid oder Kohlendioxid ist eine chemische Verbindung aus Kohlenstoff und Sauerstoff, wobei das Kohlenstoffdioxid bei der Gasemission bzw. bei einer Verbrennung von kohlenstoffhaltigen Substanzen entsteht. Hierbei sind unter kohlenstoffhaltige Substanzen Brenn- und/oder Kraftstoffe, insbesondere Benzin, zu verstehen.

Um den Kohlenstoffdioxid-Ausstoß weitestgehend zu vermindern, insbesondere als Beitrag zum Umwelt- bzw. Klimaschutz, ist mittels einer Vorgabe des Brennstoff-Durchschnittsverbrauchs und/oder für die Gasemission eine Vorgabe eines durchschnittlichen Kohlenstoffdioxid-Ausstoßes möglich.

Das Kraftfahrzeug umfasst eine Antriebseinheit oder einen Antriebsmotor, insbesondere eine Brennkraftmaschine, wie eine gas- oder kraftstoffbetriebene Verbrennungsmaschine/-motor, oder eine Elektromaschine oder eine Kombination aus einer Brennkraft- und Elektromaschine/-motor.

In einer möglichen Ausführungsform wird der optimale Betriebsmodus manuell aktiviert und der Grenzwert für den Brennstoff-Durchschnittsverbrauch und die Gasemission manuell vorgegeben. Beispielsweise wird der optimale Betriebsmodus mittels eines Schalters oder sprachgesteuert oder menügesteuert, zum Beispiel in einem Menü einer Bedieneinheit, aktiviert.

Erfindungsgemäß wird der optimale Betriebsmodus manuell aktiviert und ein Grenzwert für die Gasemission, insbesondere einen durchschnittlichen Kohlenstoffdioxid- und/oder Stickstoff-Ausstoß, manuell vorgegeben. Kohlenstoffdioxid und Stickstoff werden in Abhängigkeit einer Verbrennung eines Brenn- und/oder Kraftstoffes ausgestoßen, wobei mittels einer Aktivierung des optimalen Betriebsmodus der Grenzwert für den Brennstoff-Durchschnittsverbrauch und/oder für die Gasemission gleichzeitig einen Grenzwert für den durchschnittlichen Kohlenstoffdioxid-Ausstoß und/oder Stickstoff-Ausstoß vorgibt.

Ein Grenzwert für solch einen Kohlenstoffdioxid-Ausstoß bzw. für solch eine Emission liegt derzeitig bei maximal 120 Gramm pro Kilometer, wobei mittels des erfindungsgemäßen Verfahrens ein weitestgehend geringerer Ausstoß, zum Beispiel von 100 Gramm pro Kilometer oder 95 Gramm pro Kilometer, eingestellt werden kann. Hierbei kann insbesondere der Kohlenstoffdioxid-Ausstoß, auch als Schadstoffausstoß bezeichnet, gering gehalten werden, wodurch der Schadstoffausstoß weitestgehend verringert wird, um eine weitestgehend umweltfreundliche und verbrauchsoptimierte Nutzung des Kraftfahrzeuges zu ermöglichen.

Ein Grenzwert für solch einen Stickstoffoxid-Ausstoß bzw. für solch eine Emission liegt derzeitig bei maximal 80 Milligramm pro Kilometer, wobei mittels des erfindungsgemäßen Verfahrens ein weitestgehend geringerer Ausstoß, zum Beispiel von 60 Milligramm pro Kilometer oder 35 Milligramm pro Kilometer oder kleiner, eingestellt werden kann.

Eine Weiterbildung der Erfindung sieht vor, dass der optimale Betriebsmodus automatisch aktiviert wird, wenn in einem vorgegebenen Überwachungszeitraum eine annähernd konstante Fahrweise identifiziert wird. Eine konstante Fahrweise wird insbesondere dann identifiziert, wenn sich das Kraftfahrzeug beispielsweise außerhalb einer Start- oder Kaltphase in einem normalen Betrieb während einer Stadt- oder Landfahrt befindet oder wenn das Kraftfahrzeug insbesondere weitgehend mit konstanter Geschwindigkeit und wenig oder nur geringen Geschwindigkeitsänderungen über den vorgegebenen Überwachungszeitraum fährt.

Vorteilhafterweise kann der Grenzwert für den Brennstoff-Durchschnittsverbrauch und/oder für die Gasemission im aktivierten optimalen Betriebsmodus geändert werden. Hierdurch kann der Fahrer des Kraftfahrzeugs den Brennstoffverbrauch seinen Bedürfnissen und Fahrgewohnheiten anpassen.

In einer weiteren vorteilhaften Weise kann der Grenzwert den durchschnittlichen Kohlenstoffdioxid-Ausstoß und/oder Stickstoff-Ausstoß im aktivierten optimalen Betriebsmodus geändert werden, wodurch der Fahrer des Kraftfahrzeuges den Kohlenstoffdioxid-Ausstoß und/oder Stickstoff-Ausstoß Umweltbedürfnissen und/oder als Beitrag zum Klimaschutz anpassen kann.

In einer weiteren Ausführungsform der Erfindung wird eine Aktivierung des optimalen Betriebsmodus ausgegeben. Alternativ oder zusätzlich werden bzw. wird der vorgegebene Grenzwert für den Brennstoff-Durchschnittsverbrauch und ein ermittelter momentaner Ist-Brennstoff-Durchschnittsverbrauch und/oder die Gasemission und eine ermittelte momentane Ist-Gasemission ausgegeben. Dies ermöglicht dem Fahrer des Kraftfahrzeugs die Aktivierung des optimalen Betriebsmodus und den momentan eingestellten Grenzwert für den Brennstoff-Durchschnittsverbrauch (Soll-Brennstoff-Durchschnittsverbrauch) und/oder für die Gasemission (Soll-Gasemission) zu überwachen und bei Bedarf erneut zu ändern bzw. anzupassen.

Zudem werden bzw. wird alternativ oder zusätzlich der vorgegebene Grenzwert für die Gasemission, insbesondere den durchschnittlichen Kohlenstoffdioxid- und/oder Stickstoff-Ausstoß und/oder ein ermittelter momentaner durchschnittlicher Ist-Kohlenstoffdioxid- und/oder Ist-Stickstoff-Ausstoß ausgegeben, wobei eine solche Ausgabe eine Ausgabeeinheit, insbesondere eine Anzeige einer so genannten Energiespar- und/oder Schadstoffklasse, vorsieht, wobei beispielsweise diese Anzeige den durchschnittlichen Kohlenstoffdioxid-Ausstoß und/oder Stickstoff-Ausstoß so genannten Schadstoffklassen zu ordnet. Dabei kann der Fahrer den Kohlenstoffdioxid-/Stickstoff-Ausstoß ändern bzw. anpassen. Hierbei ist eine Steigerung eines Umweltbewusstseins möglich, wobei der Fahrer über die Anzeige der Schadstoffklasse auf einen durchschnittlichen Kohlenstoffdioxid-/Stickstoff-Ausstoß aufmerksam gemacht wird.

Darüber hinaus wird anhand von Sensorsignalen mindestens eine Aggregate-Kenngröße, insbesondere ein Energieverbrauch, mindestens eines aktiven Aggregats, insbesondere einer Lichtmaschine, einer Heckscheibenheizung, einer Frontscheibenheizung, einer Klimaanlage, einer Wärmepumpe, eines Wärmetauschers, eines Klimakompressors, eines Ventilators ermittelt, wobei gegebenenfalls bei aktiviertem optimalen Betriebsmodus die mindestens eine Aggregate-Kenngröße des mindestens einen aktiven Aggregats in Abhängigkeit vom vorgegebenen Grenzwert für den Brennstoff-Durchschnittsverbrauch und/oder für die Gasemission verändert oder angepasst wird. Dabei wird bei einem zu hohen Energieverbrauch das betreffende Aggregat, wenn dieses für den normalen Betrieb des Kraftfahrzeugs nicht notwendig ist, ausgeschaltet oder alternativ derart gesteuert, dass der Energieverbrauch reduziert wird. Insbesondere können bei einer hohen Anzahl von aktiven Aggregaten nicht betriebsnotwendige Aggregate, wie eine Sitzheizung, deaktiviert oder ausgeschaltet werden. Eine solche Ausschaltung oder Deaktivierung nicht betriebsnotwendiger Aggregate reduziert den Energiebedarf und somit den Brennstoffverbrauch des Kraftfahrzeugs infolge der Reduzierung der Belastung der Antriebseinheit durch die Reduzierung der Anzahl aktiver Aggregate.

Eine weitere Ausführungsform sieht vor, dass anhand von Sensorsignalen mindestens eine Leistungskenngröße eines Antriebsstrangs, insbesondere ein Motormoment, eine Leistung, eine Drehzahl einer Antriebseinheit, wie eines Antriebsmotors des Kraftfahrzeugs, ermittelt wird, wobei gegebenenfalls bei aktiviertem optimalen Betriebsmodus die mindestens eine Leistungskenngröße in Abhängigkeit vom vorgegebenen Grenzwert für den Brennstoff-Durchschnittsverbrauch und/oder für die Gasemission verändert oder angepasst wird. Beispielsweise kann ein Leistungssteuerorgan, z. B. eine Drosselklappe, reduziert betätigt werden oder derart betätigt werden, dass die Stellung des Leistungssteuerorgans beibehalten wird oder so verändert wird, dass die Leistung der Antriebseinheit konstant oder annähernd konstant gehalten wird.

Darüber hinaus ist vorgesehen, dass unabhängig von einer Aktivierung des optimalen Betriebsmodus im Betrieb des Kraftfahrzeuges und somit während der Fahrt eine Ist-Gasemission fortlaufend erfasst und optional gespeichert wird. Die erfasste Ist-Gasemission kann an eine Ausgabeeinheit, insbesondere eine externe Überwachungseinrichtung, übertragen werden. Bei der externen Überwachungseinrichtung kann es sich beispielsweise um eine Einrichtung zur Überwachung und Einhaltung von Gas- oder Schadstoffemissionen handeln. Dabei können die erfassten Daten, wie Ist-Gasemission und/oder Brennstoffverbrauch über eine Kommunikationsverbindung, insbesondere über eine Funk- oder Datenbusverbindung, an die Ausgabeeinheit übertragen werden.

Ferner kann anhand der erfassten Werte für die Ist-Gasemission ein Gasemissions-Durchschnittswert, insbesondere ein Tages-, Monats- und/oder Jahresdurchschnittswert ermittelt und gespeichert sowie an die externe Ausgabeeinheit übertragen werden. Hierdurch ist es möglich, zu überprüfen, ob eine Schadstoffklassifizierung des Kraftfahrzeuges durch die erfasste und übertragene tatsächliche Ist-Gasemission des Kraftfahrzeuges eingehalten wird. Dabei kann ein Verfahren zur Überwachung einer Gas- oder Schadstoffemission eines Kraftfahrzeuges vorgesehen sein, das Teil des zuvor beschriebenen Steuerungsverfahrens ist oder separat ausgebildet sein kann. Beim Überwachungsverfahren wird im Betrieb des Kraftfahrzeuges die Ist-Gasemission fortlaufend erfasst und gespeichert, wobei anhand der erfassten Werte für die Ist-Gasemission ein Gasemissions-Durchschnittswert, wie ein Tages-, Monats- und/oder Jahresdurchschnittswert, ermittelt und gespeichert und/oder an die externe Ausgabeeinheit übertragen wird.

Hierzu umfasst eine Vorrichtung zur Steuerung eines Kraftfahrzeuges im Fahrbetrieb, insbesondere zur Überwachung einer Gas- oder Schadstoffemission des Kraftfahrzeuges eine Sensoreinheit zur Erfassung einer Ist-Gasemission sowie ein Steuergerät, das eingerichtet ist, anhand der erfassten Ist-Gasemission mindestens einen Gasemissions-Durchschnittswert zu ermitteln und zu speichern, sowie eine Ausgabeeinheit zur Ausgabe und/oder Speicherung der erfassten Ist-Gasemission und/oder von ermittelten Gasemissions-Durchschnittswerten.

Zusätzlich kann mittels der Eingabeeinheit ein Grenzwert für einen Brennstoff-Durchschnittsverbrauch vorgegeben werden.

Darüber hinaus umfasst die Vorrichtung mindestens eine Sensoreinheit zur Erfassung mindestens einer Aggregate-Kenngröße mindestens eines Aggregats und/oder mindestens einer Leistungskenngröße eines Antriebsmotors. Ausführungsbeispiele der Erfindung werden im Folgenden anhand einer Zeichnung näher erläutert.

Darin zeigt:

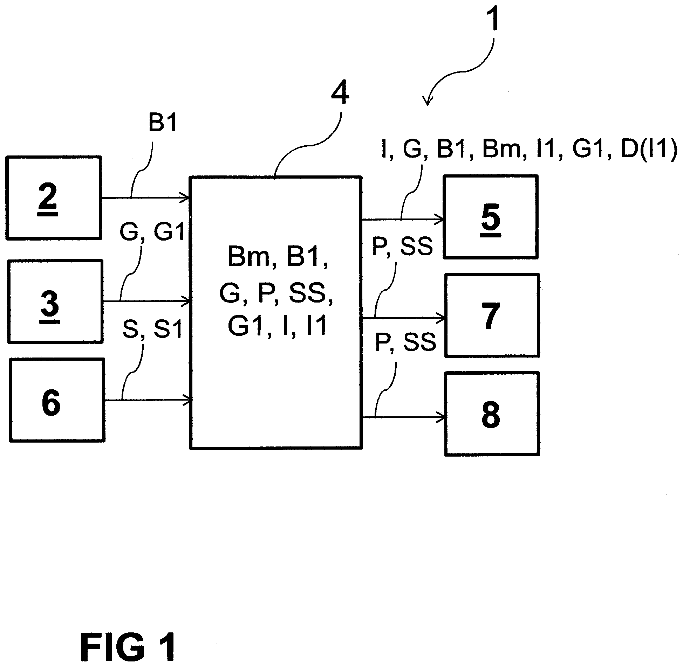

- Figur 1: schematisch eine Vorrichtung zur Steuerung eines Kraftfahrzeugs.

Die einzige **Figur 1** zeigt schematisch eine Vorrichtung 1 zur Steuerung eines nicht näher dargestellten Kraftfahrzeugs. Die Vorrichtung 1 ist insbesondere eingerichtet, das Kraftfahrzeug verbrauchsoptimiert zu steuern. Alternativ oder zusätzlich ist die Vorrichtung 1 eingerichtet, das Kraftfahrzeug im Betrieb und somit während einer Fahrt zu überwachen, insbesondere dessen Gas- oder Schadstoffemission zu erfassen und zu überwachen. Dabei kann die Vorrichtung 1 alle nachfolgend beschriebenen Komponenten umfassen. Nicht benötigte Komponenten können dabei deaktiviert sein und/oder optional vorgesehen sein.

Die Vorrichtung 1 umfasst eine Aktivierungseinheit 2 zur Aktivierung eines optimalen Betriebsmodus zur Steuerung des Kraftfahrzeugs, mindestens eine Eingabeeinheit 3 zur Vorgabe eines Grenzwerts G für einen Brennstoff-Durchschnittsverbrauch und/oder eines Grenzwerts G1 für eine Gasemission sowie ein Steuergerät 4 zur Steuerung des Kraftfahrzeugs in mindestens einem Betriebsmodus Bm.

Zur besseren Beschreibung wird im Folgenden unter der Gasemission ebenfalls ein mit der Gasemission zusammenhängender Kohlenstoffdioxid-Ausstoß, Kohlenmonoxid-Ausstoß, Stickstoff-Ausstoß und/oder Kohlenwasserstoff-Ausstoß verstanden. Kohlenstoffdioxid oder Kohlendioxid ist eine chemische Verbindung aus Kohlenstoff und Sauerstoff, wobei das Kohlenstoffdioxid der Gasemission bzw. bei einer Verbrennung von kohlenstoffhaltigen Substanzen entsteht. Hierbei sind unter kohlenstoffhaltige Substanzen Brenn- und/oder Kraftstoffe, insbesondere Benzin, zu verstehen.

Um den Kohlenstoffdioxid-/Stickstoff-Ausstoß weitestgehend zu vermindern, insbesondere als Beitrag zum Umwelt- bzw. Klimaschutz, ist mittels der Vorgabe des Brennstoff-Durchschnittsverbrauchs und/oder der Gasemission eine Vorgabe eines durchschnittlichen Kohlenstoffdioxid-/Stickstoff-Ausstoßes möglich.

Das Kraftfahrzeug umfasst in nicht näher dargestellter Art und Weise eine Antriebseinheit oder einen Antriebsmotor, insbesondere eine Brennkraftmaschine, wie eine gas- oder kraftstoffbetriebene Verbrennungsmaschine/-motor, oder eine Elektromaschine oder eine Kombination aus einer Brennkraft- und Elektromaschine/-motor.

Des Weiteren umfasst die Vorrichtung 1 mindestens eine Ausgabeeinheit 5. Als Ausgabeeinheit 5 sind bzw. ist beispielsweise eine Anzeige in einer Armatur und/oder ein Lautsprecher vorgesehen.

Ferner umfasst die Vorrichtung 1 mindestens eine Sensoreinheit 6 zur Erfassung mindestens einer Aggregate-Kenngröße mindestens eines Aggregats 7 des Kraftfahrzeugs und/oder mindestens einer Leistungskenngröße eines Antriebsstrangs 8, wobei diese Kenngrößen als Sensorsignale S dem Steuergerät 4 zur weiteren Verarbeitung und zur Steuerung des Kraftfahrzeugs in dem mindestens einem Betriebsmodus Bm zugeführt werden.

Die Aktivierungseinheit 2 ist in der einfachen Ausführungsform in nicht näher dargestellter Art und Weise als ein Schalter oder ein Betätigungselement am Lenkrad und/oder an einer Armatur des Kraftfahrzeugs ausgebildet. Dabei kann mittels der Aktivierungseinheit 2 als der mindestens eine Betriebsmodus Bm ein optimaler Betriebsmodus B1 manuell aktiviert oder deaktiviert werden. In einer alternativen Ausführungsform ist die Aktivierungseinheit 2 als eine Bedienfunktion einer Sprachsteuerung und/oder als ein Menüpunkt einer menügeführten Bedienung beispielsweise eines Tastbildschirms ausgeführt.

Die Eingabeeinheit 3 ist insbesondere eine Taste oder ein Betätigungselement am Lenkrad und/oder an einer Armatur des Kraftfahrzeugs und/oder ein Mikrofon einer Sprachsteuerung. Die Eingabeeinheit 3 dient insbesondere der manuellen Eingabe eines Grenzwerts G für den Brennstoff-Durchschnittsverbrauch als Soll-Brennstoff-Durchschnittsverbrauch und/oder eines Grenzwerts G1 für die Gasemission als Soll-Gasemission.

Das Steuergerät 4 ist für eine verbrauchsoptimierte Steuerung des Kraftfahrzeuges derart eingerichtet, dass geprüft wird, ob als ein Betriebsmodus Bm ein vorgegebener optimaler Betriebsmodus B1 zur Steuerung des Kraftfahrzeugs aktiviert ist und ein Grenzwert G für einen Brennstoff-Durchschnittsverbrauch und/oder ein Grenzwert G1 für eine Gasemission vorgegeben ist, wobei bei aktiviertem optimalen Betriebsmodus B1 und ermitteltem Grenzwert G für den Brennstoff-Durchschnittsverbrauch und/oder ermitteltem Grenzwert G1 für die Gasemission das Kraftfahrzeug derart gesteuert wird, dass maximal der vorgegebene Grenzwert G für den Brennstoff-Durchschnittsverbrauch verbraucht und/oder maximal der vorgegebene Grenzwert G1 für die Gasemission emittiert/ausgestoßen wird.

Mit anderen Worten: Mittels des Steuergeräts 4 wird das Kraftfahrzeug derart gesteuert, dass ein ermittelter Ist-Brennstoff-Durchschnittsverbrauch maximal dem vorgegebenen Grenzwert G für den Brennstoff-Durchschnittsverbrauch und/oder eine ermittelte Ist-Gasemission maximal dem vorgegebenen Grenzwert G1 für die Gasemission und somit einem vorgegebenen Sollverbrauch und/oder einer Sollemission entspricht.

Dazu wird mindestens ein Parameter P und/oder eine Stellgröße SS des mindestens einen Aggregats 7 und/oder des Antriebsstrangs 8 des Kraftfahrzeugs entsprechend eingestellt.

Hierzu wird anhand von Sensorsignalen S, die dem Steuergerät 4 zur weiteren Verarbeitung zugeführt werden, mindestens eine Aggregate-Kenngröße, insbesondere ein Energieverbrauch, mindestens eines aktiven Aggregats 7, insbesondere ein elektrischer und/oder hydraulischer Verbraucher bestimmt. Beispielsweise wird identifiziert, welche Aggregate 7 des Kraftfahrzeugs aktiviert und im Betrieb sind. Darüber hinaus wird der momentane Energieverbrauch mindestens eines aktiven Aggregats 7 ermittelt. Beispielsweise wird der momentane Energieverbrauch einer Lichtmaschine, einer Heckscheibenheizung, einer Frontscheibenheizung, einer Klimaanlage, einer Wärmepumpe, eines Wärmetauschers, eines Klimakompressors, eines Ventilators und/oder anderer aktiver Aggregate 7 ermittelt.

Anhand der ermittelte/n Aggregate-Kenngröße/n und/oder Leistungskenngrößen wird dann mittels des Steuergeräts 4 unter Berücksichtigung des vorgegebenen Grenzwerts G des Brennstoff-Durchschnittsverbrauchs und des ermittelten momentanen Ist-Brennstoff-Durchschnittsverbrauchs I gegebenenfalls, insbesondere bei einer Differenz zwischen dem Grenzwert G und dem Ist-Brennstoff-Durchschnittsverbrauch I, zumindest ein einzustellender Parameter P und/oder eine einzustellende Stellgröße SS zur Einstellung und/oder Steuerung des/der Aggregats/e 7 bzw. des Antriebsstrangs 8 erzeugt. Solch eine Vorgehensweise gilt ebenfalls unter Berücksichtigung des vorgegebenen Grenzwerts G1 der Gasemission und der ermittelten momentanen Ist-Gasemission I1.

Mit anderen Worten: das Steuergerät 4 ist derart eingerichtet, dass bei identifiziertem aktivierten optimalen Betriebsmodus B1 gegebenenfalls die mindestens eine Aggregate-Kenngröße des mindestens einen aktiven Aggregats 7 in Abhängigkeit vom vorgegebenen Grenzwert G für den Brennstoff-Durchschnittsverbrauch und/oder vom vorgegebenen Grenzwert G1 der Gasemission verändert oder angepasst wird.

So kann beispielsweise eine Lichtmaschine oder eine Heckscheibenheizung in einen Sparbetrieb geschaltet werden, in welchem der Energieverbrauch deutlich reduziert ist, wodurch der Brennstoff-Durchschnittsverbrauch und/oder die Gasemission gesenkt wird bzw. werden.

Darüber hinaus wird beispielsweise bei einem zu hohen Energieverbrauch das betreffende Aggregat 7, wenn dieses für den normalen Betrieb des Kraftfahrzeugs nicht notwendig ist, ausgeschaltet oder alternativ derart gesteuert, dass der Energieverbrauch reduziert wird. Alternativ oder zusätzlich können bei einer hohen Anzahl von aktiven Aggregaten 7 mittels des Steuergeräts 4 nicht betriebsnotwendige Aggregate 7, wie eine Sitzheizung, deaktiviert oder ausgeschaltet werden.

Ferner können weitere Aggregate 7, wie ein- oder ausfahrbare Anbauteile am Kraftfahrzeug, derart positioniert, insbesondere eingefahren, werden, dass diese die Aerodynamik des Kraftfahrzeugs optimieren, insbesondere den Luftwiderstand des Kraftfahrzeugs reduzieren. Eine solche Neupositionierung, Ausschaltung und/oder Deaktivierung nicht betriebsnotwendiger Aggregate 7 reduziert den Energiebedarf und somit den Brennstoffverbrauch und/oder die damit verbundene Gasemission des Kraftfahrzeugs infolge der Reduzierung der Belastung der Antriebseinheit durch die Reduzierung der Anzahl aktiver Aggregate 7.

Alternativ oder zusätzlich wird anhand von weiteren, dem Steuergerät 4 zur weiteren Verarbeitung zugeführten Sensorsignalen S mindestens eine Leistungskenngröße des Antriebsstrangs 8, insbesondere ein Motormoment, eine Leistung, eine Drehzahl einer Antriebseinheit, wie eines Antriebsmotors des Kraftfahrzeugs, ermittelt.

Dabei ist das Steuergerät 4 derart eingerichtet, dass bei identifiziertem aktivierten optimalen Betriebsmodus B1 die mindestens eine Leistungskenngröße in Abhängigkeit vom vorgegebenen Grenzwert G für den Brennstoff-Durchschnittsverbrauch und/oder vom vorgegebenen Grenzwert G1 der Gasemission verändert oder angepasst wird. Beispielsweise kann ein Leistungssteuerorgan, zum Beispiel eine Drosselklappe, reduziert betätigt oder derart betätigt werden, dass die Stellung des Leistungssteuerorgans beibehalten wird oder so verändert wird, dass die Leistung der Antriebseinheit konstant oder annähernd konstant gehalten wird.

Ferner kann bei aktiviertem Allrad-Antrieb dieser bei einer anhand der Sensorsignale S identifizierten Stadt- oder Landfahrt der Allrad-Antrieb deaktiviert werden. Auch kann mittels des Steuergeräts 4 anhand der erfassten Sensorsignale ein Zustand eines Fahrwerks ermittelt werden. Ist beispielsweise das Kraftfahrzeug in eine hohe Position gestellt, so wird bei aktiviertem optimalen Betriebsmodus B1 und bei noch vorhandener und mittels des Steuergeräts 4 ermittelter Abweichung oder Differenz des Ist-Brennstoff-Durchschnittsverbrauchs I vom vorgegebenen Grenzwert G des Brennstoff-Durchschnittsverbrauchs (= Soll-Brennstoff-Durchschnittsverbrauch) das Fahrwerk des Kraftfahrzeugs herunter gestellt, so dass der Luftwiderstand und somit die Aerodynamik des Kraftfahrzeugs verbessert werden. Diese Vorgehensweise gilt ebenfalls bei aktiviertem optimalen Betriebsmodus B1 und bei noch vorhandener und mittels des Steuergeräts 4 ermittelter Abweichung oder Differenz der Ist-Gasemission I1 vom vorgegebenen Grenzwert G1 der Gasemission (=Soll-Gasemission).

Eine weitere Ausführungsform sieht vor, dass der optimale Betriebsmodus B1 manuell mittels der Aktivierungseinheit 2 aktiviert und der Grenzwert G für den Brennstoff-Durchschnittsverbrauch und/oder die Gasemission manuell mittels der Eingabeeinheit 3 vorgegeben wird. Dabei können die Aktivierungseinheit 2 und die Eingabeeinheit 3 als separate Elemente oder als ein Multifunktionsschalter oder als ein Multifunktionsmenü einer Bedieneinheit, wie eines Tastbildschirms, ausgebildet sein.

Ferner kann das Steuergerät 4 derart eingerichtet sein, dass der optimale Betriebsmodus B1 automatisch aktiviert wird, wenn in einem vorgegebenen Überwachungszeitraum eine annähernd konstante Fahrweise des Kraftfahrzeugs identifiziert wird. Eine konstante Fahrweise wird insbesondere dann identifiziert, wenn sich das Kraftfahrzeug beispielsweise außerhalb einer Start- oder Kaltphase in einem normalen Betrieb während einer Stadt- oder Landfahrt befindet oder wenn das Kraftfahrzeug insbesondere weitgehend mit konstanter Geschwindigkeit und wenig oder nur geringen Geschwindigkeitsänderungen über den vorgegebenen Überwachungszeitraum fährt.

Weiterhin wird mittels des Steuergeräts 4 das Kraftfahrzeug derart gesteuert, dass die ermittelte momentane Ist-Gasemission I1, insbesondere ein ermittelter durchschnittlicher Ist-Kohlenstoffdioxid-Ausstoß, maximal einem vorgegebenen Grenzwert G1 für die Gasemission bzw. den durchschnittlichen Kohlenstoffdioxid-Ausstoß und somit einer vorgegebenen Soll-Gasemission bzw. Sollausstoß entspricht.

Weiterhin wird anhand von weiteren, dem Steuergerät 4 zur weiteren Verarbeitung zugeführten Sensorsignalen S1 zumindest eine Kohlenstoffdioxid-/Stickstoff-Ausstoßgröße in Abhängigkeit des Brennstoff-Durchschnittsverbrauchs und/oder der Gasemission ermittelt.

Vorzugsweise wird als Gasemission der Kohlenstoffdioxid- und/oder Stickstoff-Ausstoß mittels der Sensoreinheit 6 erfasst, wobei zusätzlich auch eine weitere Sensoreinheit zur mehrfachen ortsbezogenen Erfassung und/oder Plausibilisierung des Kohlenstoffdioxid-Ausstoßes und/oder Stickstoff-Ausstoß und/oder zur Erfassung weiterer Größen, wie eines Kohlenmonoxids- und/oder Kohlenwasserstoff-Ausstoßes, vorgesehen sein kann.

Zusätzlich dient die Eingabeeinheit 3 insbesondere der manuellen Eingabe eines Grenzwerts G1 für einen durchschnittlichen Kohlenstoffdioxid- oder Stickstoff-Ausstoß als durchschnittlicher Kohlenstoffdioxid- oder Stickstoff-Ausstoß-Sollwert, wobei Kohlenstoffdioxid bzw. Stickstoff in Verbindung mit einer chemischen Oxidation während einer Gasemission ausgestoßen wird. Mittels einer Aktivierung des optimalen Betriebsmodus B1 für den Brennstoff-Durchschnittsverbrauch und/oder die Gasemission wird gleichzeitig der Grenzwert G1 für die Gasemission bzw. den durchschnittlichen Kohlenstoffdioxid- oder Stickstoff-Ausstoß vorgegeben.

In dieser zusätzlichen Ausführungsform ist mittels der Ausgabeeinheit 5, insbesondere eine Ausgabe einer so genannten Energiespar- und/oder Schadstoffklasse für einen Brennstoff-Durchschnittsverbrauch und/oder die Gasemission, insbesondere einen Kohlenstoffdioxid- und/oder Stickstoff-Ausstoß, vorgesehen. Dabei können die ermittelten Daten an einer Anzeige in einer Armatur und/oder mittels zumindest eines Lautsprechers ausgegeben und/oder an eine externe Überwachungseinrichtung übertragen werden.

Zusätzlich kann bei einer automatischen Aktivierung des optimalen Betriebsmodus B1 diese Aktivierung mittels einer Eingabe des Fahrers des Kraftfahrzeugs über die Eingabeeinheit 3 und/oder die Aktivierungseinheit 2 bestätigt oder deaktiviert werden.

Zur Anpassung des Brennstoffverbrauchs und/oder der Gasemission des Fahrzeugs an Wünsche, Bedürfnisse und Fahrgewohnheiten des Fahrers kann der vorgegebene Grenzwert G für den Brennstoff-Durchschnittsverbrauch und/oder der vorgegebene Grenzwert G1 für die Gasemission auch im aktivierten optimalen Betriebsmodus B1 über eine Eingabe an der Eingabeeinheit 3 geändert werden.

Der eingestellte oder geänderte Grenzwert G kann darüber hinaus auf der Ausgabeeinheit 5 ausgegeben, insbesondere angezeigt werden, so dass der Fahrer des Kraftfahrzeugs eine Rückmeldung über den momentan eingestellten oder vorgegebenen Grenzwert G für die Brennstoff-Durchschnittsverbrauch und/oder den Grenzwert G1 der Gasemission hat.

Alternativ oder zusätzlich kann ein ermittelter momentaner Ist-Brennstoff-Durchschnittsverbrauch I und/oder eine ermittelte momentane Ist-Gasemission I1 auf der Ausgabeeinheit 5 ausgegeben, insbesondere angezeigt, und/oder gespeichert werden.

Bei der Ausgabeeinheit 5 kann es sich beispielsweise um eine fahrzeuginterne Ausgabeeinrichtung und/oder eine fahrzeugexterne Ausgabe- oder Überwachungseinrichtung, wie eine Einrichtung zur Überwachung und Einhaltung von Gas- oder Schadstoffemissionen, handeln. Dabei werden zusätzlich zur ermittelten Ist-Gasemission I1 fahrzeugbezogene Daten übermittelt, um beispielsweise eine Schadstoffklassifizierung des Fahrzeugs zu überprüfen. Auch können die weiteren ermittelten Daten, wie Ist-Brennstoff-Durchschnittsverbrauch I, der gewählte oder aktive Betriebsmodus B, B1, Bm ausgegeben und/oder übertragen werden.

Die erfassten Daten, wie der erfasste Ist-Brennstoff-Durchschnittsverbrauchs und/oder die Ist-Gasemission I1, werden dabei beispielsweise drahtlos über eine Kommunikationsverbindung, insbesondere eine Funkverbindung, an die Ausgabeeinheit 5 übertragen.

Ferner kann anhand der erfassten Werte für die Ist-Gasemission I1 ein Gasemissions-Durchschnittswert D1 , insbesondere ein Tages-, Monats- und/oder Jahresdurchschnittswert ermittelt und gespeichert sowie an die externe Ausgabeeinheit 5 übertragen werden.

Ferner kann zusätzlich eine Rückmeldung über die Aktivierung des optimalen Betriebsmodus B1 auf der Ausgabeeinheit 5 ausgegeben, insbesondere angezeigt, werden.

Somit ist der Fahrer bei Ausgabe einer Information sowohl über die Aktivierung des optimalen Betriebsmodus B1 als auch über den momentan eingestellten Grenzwert G und den momentan ermittelten Ist-Brennstoff-Durchschnittsverbrauchs I und/oder über den momentan eingestellten Grenzwert G1 und/oder über die momentan ermittelte Ist-Gasemission I1 und/oder über den Gasemissions-Durchschnittswert D1, insbesondere stets über die aktuellen Verbrauchswerte und Betriebszustände, informiert und kann zusätzlich sein Fahrverhalten für eine noch weitere Reduzierung des Brennstoffverbrauchs und/oder den vorzugebenen Grenzwert G für den Brennstoff-Durchschnittsverbrauch und/oder den vorzugebenen Grenzwert G1 der Gasemission anpassen.

Dies ermöglicht dem Fahrer des Kraftfahrzeugs die Aktivierung des optimalen Betriebsmodus B1 und den momentan eingestellten Grenzwert G für den Brennstoff-Durchschnittsverbrauch und/oder den momentan eingestellten Grenzwert G1 der Gasemission zu überwachen und bei Bedarf erneut zu ändern bzw. anzupassen.

Die Vorteile der Erfindung liegen darin, dass durch die Steuerung des Kraftfahrzeugs in Abhängigkeit vom ermittelten Grenzwert G für den Brennstoff-Durchschnittsverbrauch und/oder vom ermittelten Grenzwert G1 der Gasemission das Kraftfahrzeug mit optimalem, insbesondere reduziertem oder geringstem Brennstoffverbrauch, reduzierten Gasemission und Schadstoffausstoß und somit besonders wirtschaftlich und Kosten sparend betrieben werden kann.

Zudem liegt ein Vorteil darin, dass mittels dem Grenzwert G1 der Gasemission bzw. des Kohlenstoffdioxid-Ausstoßes eine Steigerung eines Umweltbewusstseins möglich ist, wobei der Fahrer über die Anzeige der Energiespar- und/oder Schadstoffklasse auf den durchschnittlichen Kohlenstoffdioxid-/Stickstoff-Ausstoß aufmerksam gemacht wird und dementsprechend den Kohlenstoffdioxid- und/oder Stickstoff-Ausstoß weitestgehend verringern bzw. ändern kann.

### BEZUGSZEICHENLISTE

- 1: Vorrichtung zur verbrauchsoptimierten Steuerung
- 2: Aktivierungseinheit
- 3: Eingabeeinheit
- 4: Steuergerät
- 5: Ausgabeeinheit
- 6: Sensoreinheit
- 7: Aggregat
- 8: Antriebsstrang
- Bm: Betriebsmodus
- B1: optimaler Betriebsmodus
- D1: Gasemissions-Durchschnittswert
- G: Grenzwert für Brennstoff-Durchschnittsverbrauch
- G1: Grenzwert für Gasemission
- I: Ist-Brennstoff-Durchschnittsverbrauch
- I1: Ist-Gasemission
- P: Parameter
- S: Sensorsignal
- S1: Weiteres Sensorsignal
- SS: Stellgröße

## Patentansprüche

1. Verfahren zur verbrauchsoptimierten Steuerung eines Kraftfahrzeuges, wobei geprüft wird, ob ein vorgegebener optimaler Betriebsmodus (B1) zur Steuerung des Kraftfahrzeugs aktiviert ist,und ein Grenzwert (G1) für eine Gasemission vorgegeben ist, wobei bei aktiviertem optimalen Betriebsmodus (B1) und ermitteltem Grenzwert (G1) für die Gasemission das Kraftfahrzeug derart gesteuert wird, dass maximal der vorgegebene, insbesondere ein minimaler Grenzwert (G1) für die Gasemission emittiert wird,
**dadurch gekennzeichnet, dass** der optimale Betriebsmodus (B1) manuell aktiviert wird und der Grenzwert (G1) für die Gasemission, insbesondere für einen durchschnittlichen Kohlenstoffdioxid- und/oder Stickstoff-Ausstoß, manuell vorgegeben wird.

2. Verfahren nach einem der vorhergehenden Ansprüche, **dadurch gekennzeichnet, dass** der optimale Betriebsmodus (B1) automatisch aktiviert wird, wenn in einem vorgegebenen Überwachungszeitraum eine annähernd konstante Fahrweise identifiziert wird.

3. Verfahren nach einem der vorhergehenden Ansprüche, **dadurch gekennzeichnet, dass** der Grenzwert (G1) für die Gasemission im aktivierten optimalen Betriebsmodus (B1) geändert wird.

4. Verfahren nach einem der vorhergehenden Ansprüche, **dadurch gekennzeichnet, dass** eine Aktivierung des optimalen Betriebsmodus (B1) ausgegeben wird.

5. Verfahren nach einem der vorhergehenden Ansprüche, **dadurch gekennzeichnet, dass** der vorgegebene Grenzwert (G1) für die Gasemission und/oder eine ermittelte momentane Ist-Gasemission (I1), insbesondere ein Ist-Kohlenstoffdioxid-Ausstoß und/oder Ist-Stickstoff-Ausstoß, ausgegeben werden bzw. wird.

6. Verfahren nach einem der vorhergehenden Ansprüche, **dadurch gekennzeichnet, dass** anhand von Sensorsignalen (S) und/oder weiteren Sensorsignalen (S1) mindestens eine Aggregate-Kenngröße aktiver Aggregate (7), insbesondere einer Lichtmaschine, einer Heckscheibenheizung, einer Frontscheibenheizung, einer Klimaanlage, einer Wärmepumpe, eines Wärmetauschers, eines Klimakompressors, eines Ventilators, ermittelt wird, wobei bei aktiviertem optimalen Betriebsmodus (B1) die mindestens eine Aggregate-Kenngröße in Abhängigkeit vom vorgegebenen Grenzwert (G1) für die Gasemission verändert oder angepasst wird.

7. Verfahren nach einem der vorhergehenden Ansprüche, **dadurch gekennzeichnet, dass** anhand von Sensorsignalen (S) und/oder weiteren Sensorsignalen (S1) mindestens eine Leistungskenngröße eines Antriebsstrangs (8), insbesondere ein Motormoment, eine Leistung, eine Drehzahl eines Antriebsmotors des Kraftfahrzeugs, ermittelt wird, wobei bei aktiviertem optimalen Betriebsmodus (B1) die mindestens eine Leistungskenngröße in Abhängigkeit vom vorgegebenen Grenzwert (G1) für die Gasemission verändert oder angepasst wird.

8. Verfahren nach einem der vorhergehenden Ansprüche, **dadurch gekennzeichnet, dass** unabhängig von einer Aktivierung des optimalen Betriebsmodus (B1) eine Ist-Gasemission (I1) ermittelt und optional gespeichert und/oder an eine Ausgabeeinheit (5), insbesondere eine externe Überwachungseinrichtung, übertragen wird.

9. Verfahren nach Anspruch 8, **dadurch gekennzeichnet, dass** anhand der erfassten Werte für die Ist-Gasemission (I1) ein Gasemissions-Durchschnittswert (D(I1)) ermittelt und gespeichert und/oder an eine Ausgabeeinheit (5) übertragen wird.

10. Verfahren zur Überwachung einer Gasemission eines Kraftfahrzeuges,
**dadurch gekennzeichnet, dass** im Betrieb des Kraftfahrzeuges eine Ist-Gasemission (I1) fortlaufend erfasst und gespeichert wird, wobei anhand der erfassten Werte für die Ist-Gasemission (I1) ein Gasemissions-Durchschnittswert (D(I1)) ermittelt und gespeichert und/oder an eine Ausgabeeinheit (5) übertragen wird.

11. Verfahren nach Anspruch 10, wobei die Ist-Gasemission (I1) und/oder der Gasemissions-Durchschnittswert (D(I1)) fortlaufend ermittelt und gespeichert werden bzw. wird und an eine externe Ausgabeeinheit (5) übertragen werden bzw. wird.

12. Verfahren nach Anspruch 10 oder 11, wobei anhand der übertragenen Ist-Gasemission (I1) und/oder des Gasemissions-Durchschnittswertes (D(I1)) geprüft wird, ob eine Schadstoffklassifizierung des Kraftfahrzeuges eingehalten wird.

13. Vorrichtung (1) zur verbrauchsoptimierten Steuerung eines Kraftfahrzeuges, umfassend
- eine Aktivierungseinheit (2) zur manuellen Aktivierung eines optimalen Betriebsmodus (B1) zur Steuerung des Kraftfahrzeugs,
- eine Eingabeeinheit (3) zur manuellen Vorgabe eines Grenzwerts (G1) für eine Gasemission sowie
- ein Steuergerät (4), das derart eingerichtet ist, ein Verfahren nach einem der Ansprüche 1 bis 12 auszuführen.

14. Vorrichtung nach Anspruch 13,
**gekennzeichnet durch** mindestens eine Sensoreinheit (6) zur Erfassung mindestens einer Aggregate-Kenngröße mindestens eines Aggregats (7) und/oder mindestens einer Leistungskenngröße eines Antriebsstrangs (8).

## Claims

1. Method for the consumption-optimized control of a motor vehicle, wherein a check is made as to whether a predetermined optimum operating mode (BI) for controlling the motor vehicle is activated, and a limit value (GI) for a gas emission is predetermined, wherein, when the optimum operating mode (BI) is activated and the limit value (GI) for the gas emission is determined, the motor vehicle is controlled in such a way that at most the predetermined, in particular a minimum, limit value (GI) for the gas emission is emitted,
**characterized in that** the optimum operating mode (BI) is activated manually and the limit value (GI) for the gas emission, in particular for an average carbon dioxide and/ or nitrogen emission, is specified manually.

2. Method according to any one of the preceding claims, **characterized in that** the optimum operating mode (BI) is automatically activated when an approximately constant driving mode is identified in a predetermined monitoring period.

3. Method according to any one of the preceding claims, **characterized in that** the limit value (GI) for the gas emission is changed in the activated optimum operating mode (B1).

4. Method according to any one of the preceding claims, **characterized in that** an activation of the optimum operating mode (B 1) is output.

5. Method according to one of the preceding claims, **characterized in that** the predetermined limit value (GI) for the gas emission and/or a determined instantaneous actual gas emission (11), in particular an actual carbon dioxide emission and/or actual nitrogen emission, is/are output.

6. Method according to any one of the preceding claims, **characterized in that** at least one unit characteristic variable of active units (7), in particular of an alternator, a rear window heater, a front window heater, an air-conditioning system, a heat pump, a heat exchanger, an air-conditioning compressor, a fan, is determined on the basis of sensor signals (S) and/or further sensor signals (S1), the at least one unit characteristic variable being changed or adapted as a function of the predetermined limit value (G1) for the gas emission when the optimum operating mode (B1) is activated.

7. Method according to any one of the preceding claims, **characterized in that** at least one performance parameter of a drive train (8), in particular an engine torque, a power, a rotational speed of a drive engine of the motor vehicle, is determined on the basis of sensor signals (S) and/or further sensor signals (S1), the at least one performance parameter being changed or adapted as a function of the predetermined limit value (GI) for the gas emission when the optimum operating mode (B1) is activated.

8. Method according to any one of the preceding claims, **characterized in that**, independently of an activation of the optimum operating mode (B1), an actual gas emission (11) is determined and optionally stored and/or transmitted to an output unit (5), in particular to an external monitoring device.

9. Method according to claim 8, **characterized in that** a gas emission average value (D(I1)) is determined and stored and/or transmitted to an output unit (5) on the basis of the detected values for the actual gas emission (Il).

10. Method for monitoring a gas emission of a motor vehicle, **characterized in that** an actual gas emission (Il) is continuously detected and stored during operation of the motor vehicle, a gas emission average value (D(I1)) being determined and stored and/ or transmitted to an output unit (5) on the basis of the detected values for the actual gas emission (II).

11. Method according to claim 10, wherein the actual gas emission (Il) and/or the average gas emission value (D(I1)) are continuously determined and stored and transmitted to an external output unit (5).

12. Method according to claim 10 or 11, wherein, based on the transmitted actual gas emission (Il) and/or the average gas emission value (D(I1)), a check is carried out as to whether a pollutant classification of the motor vehicle is complied with.

13. Device (1) for consumption-optimized control of a motor vehicle, comprising
- an activation unit (2) for manually activating an optimum operating mode B1) for controlling the motor vehicle,
- an input unit (3) for manually specifying a limit value (GI) for a gas emission, and
- a control unit (4) which is set up in such a way that it can execute a method according to one of Claims 1 to 12.

14. Device according to claim 13, **characterized by** at least one sensor unit (6) for detecting at least one unit characteristic variable of at least one unit (7) and/or at least one power characteristic variable of a drive train (8).

## Revendications

1. Procédé de commande optimisée de la consommation d'un véhicule automobile, selon lequel on vérifie si un mode de fonctionnement optimal (BI) prédéterminé pour la commande du véhicule automobile est activé et si une valeur limite (GI) pour une émission de gaz est prédéterminée, selon lequel, lorsque le mode de fonctionnement optimal (BI) est activé et que la valeur limite (GI) pour l'émission de gaz est déterminée, le véhicule automobile est commandé de telle sorte qu'au maximum la valeur limite (G1) prédéterminée, notamment minimale, pour l'émission de gaz soit émise, **caractérisé en ce que** le mode de fonctionnement optimal (BI) est activé manuellement et la valeur limite (GI) pour l'émission de gaz, en particulier pour une émission moyenne de dioxyde de carbone et/ou d'azote, est prédéterminée manuellement..

2. Procédé selon l'une des revendications précédentes, **caractérisé en ce que** le mode de fonctionnement optimal (BI) est automatiquement activé lorsqu'un mode de conduite approximativement constant est identifié dans une période de surveillance prédéterminée.

3. Procédé selon l'une des revendications précédentes, **caractérisé en ce que** la valeur limite (GI) pour l'émission de gaz est modifiée dans le mode de fonctionnement optimal activé (B1).

4. Procédé selon l'une des revendications précédentes, **caractérisé en ce qu'**on émet une activation du mode de fonctionnement optimal (B 1).

5. Procédé selon l'une des revendications précédentes, **caractérisé en ce que** la valeur limite prédéterminée (GI) pour l'émission de gaz et/ou une émission de gaz réelle instantanée déterminée (11), en particulier une émission de dioxyde de carbone réelle et/ou une émission d'azote réelle, est/sont émise(s).

6. Procédé selon l'une des revendications précédentes, **caractérisé en ce qu'**au moins une grandeur caractéristique d'unité d'unités actives (7), notamment d'un alternateur, d'un chauffage de lunette arrière, d'un chauffage de lunette avant, d'un système de climatisation, d'une pompe à chaleur, d'un échangeur de chaleur, d'un compresseur de climatisation, d'un ventilateur, est déterminée sur la base de signaux de capteur (S) et/ ou d'autres signaux de capteur (S1), la au moins une grandeur caractéristique d'unité étant modifiée ou adaptée en fonction de la valeur limite prédéterminée (G1) pour l'émission de gaz lorsque le mode de fonctionnement optimal (B1) est activé.

7. Procédé selon l'une des revendications précédentes, **caractérisé en ce qu'**au moins un paramètre de puissance d'une chaîne cinématique (8), notamment un couple moteur, une puissance, une vitesse de rotation d'un moteur d'entrainement du véhicule automobile, est déterminé sur la base de signaux de capteur (S) et/ou d'autres signaux de capteur (S1), le au moins un paramètre de puissance étant modifié ou adapté en fonction de la valeur limite (GI) prédéfinie pour l'émission de gaz lorsque le mode de fonctionnement optimal (B1) est activé.

8. Procédé selon l'une des revendications précédentes, **caractérisé en ce que**, indépendamment d'une activation du mode de fonctionnement optimal (B1), une émission de gaz réelle (11) est déterminée et éventuellement mémorisée et/ou transmise à une unité de sortie (5), notamment un dispositif de surveillance externe.

9. Procédé selon la revendication 8, **caractérisé en ce qu'**une valeur moyenne d'émission de gaz (D(I1)) est déterminée et stockée et/ou transmise à une unité de sortie (5) sur la base des valeurs détectées pour l'émission de gaz réelle (Il).

10. Procédé de surveillance d'une émission de gaz d'un véhicule automobile, **caractérisé en ce qu'**une émission de gaz réelle (Il) est détectée et mémorisée en continu pendant le fonctionnement du véhicule automobile, une valeur moyenne d'émission de gaz (D(Il)) étant déterminée et mémorisée et/ou transmise à une unité de sortie (5) sur la base des valeurs détectées pour l'émission de gaz réelle (Il).

11. Procédé selon la revendication 10, dans lequel l'émission réelle de gaz (Il) et/ou la valeur moyenne d'émission de gaz (D(I1)) est/sont déterminée(s) en continu et stockée(s) et transmise(s) à une unité de sortie externe (5).

12. Procédé selon la revendication 10 ou 11, dans lequel l'émission réelle de gaz (Il) transmise et/ou la valeur moyenne d'émission de gaz (D(I1)) est utilisée pour vérifier si une classification de polluants du véhicule à moteur est respectée.

13. Dispositif (1) pour la commande optimisée de la consommation d'un véhicule à moteur, comprenant
- une unité d'activation (2) pour activer manuellement un mode de fonctionnement optimal (B1) pour la commande du véhicule à moteur,
- une unité d'entrée (3) pour spécifier manuellement une valeur limite (GI) pour une émission de gaz, et
- une unité de commande (4) qui est configurée de telle sorte qu'un procédé selon l'une des revendications 1 à 12 puisse être mis en œuvre.

14. Dispositif selon la revendication 13, **caractérisé par** au moins une unité de détection (6) pour détecter au moins une grandeur caractéristique d'unité d'au moins une unité (7) et/ou au moins une grandeur caractéristique de puissance d'une chaîne cinématique (8).
